# EUROPEAN PATENT APPLICATION

(11) **EP 2 112 629 A1**
(43) Date of publication of application: **28.10.2009**
(21) Application number: 07827875.1
(22) Date of filing: 10.10.2007
(51) Int. Cl.: G06Q 50/00

(54) **CONTINUOUS SUPPORTING SYSTEM USING COMPUTER**

(30) Priority: 15.02.2007 JP 2007034304
(71) Applicant: Key Planning, Co., Ltd., Tokyo 171-0014 (JP)
(72) Inventor: KINOSHITA, Yuichiro, Tokyo 171-0014 (JP)
(74) Representative: Müller Verweyen
(86) International application number: PCT/JP2007/001096
(87) International publication number: WO 2008/099441

(57) **Abstract**

[PROBLEMS TO BE SOLVED] Problems to be solved are to provide a novel epoch-making system that can help a person to obtain his or her goal and that can improve profitability and customer satisfaction for an enterprise or a party.

[MEANS FOR SOLVING THE PROBLEMS] A continuously supporting system, which helps a user to make a continuous endeavor for reaching his or her goal, is comprised of a user information recording unit to record use's property information; a goal information recording unit to record use's goal information; and an achievement information recording unit that is associated with the goal information recording unit, records user's endeavor and achievement information, and is possible to update its data by the user. In accordance with at least the data recorded at the achievement information recording unit, if the endeavor and achievement information is not updated by the user for a predetermined period, the system sends the user a first message to call his or her attention to it.

## Description

### TECHNICAL FIELD

The present invention relates to a "continuous supporting system" for maintaining/boosting motivation.

### BACKGROUND ART

The inventor of the present invention was told once in a complete physical examination to improve his obesity and lifestyle habits, which lead him to go on a diet. Due to his irregular lifestyle patterns and so on, he first struggled with the diet. But, fortunately, because of the cooperation of people around him and an improvement in eating habits and exercise, the diet went pretty well and the results of a complete physical examination were all back to normal. This may have stimulated his acquaintances and friends and after that they tried diets as well. But most of them failed halfway through. Seeing this fact with his own eyes gave him a chance to think about what made it different (the branch point between "able to continue" and "unable to continue").

The inventor realized there. People who succeed are those who were able to continue certain efforts without being obsessed too much with methodologies (eating/not eating specific foods, do muscle workouts/stretches/aerobic exercises, etc.). People who fail halfway through are unable to continue certain efforts, regardless of whether the methodologies are good or bad.

Actually, taking a look at the actions of people who achieve their goals in some field, a mainstream pattern is that "they first take action and "continue" efforts as making modifications at any time to points, if any, that need to be improved". However, the essence of goal achievement is "to start" and "to continue" and methodologies are considered to be a secondary element that can be improved by trial and error as one is continuing. Also, there is a remarkable tendency that "people who were able to continue certain efforts are in an environment where they can maintain their motivation by the habit of always checking their goals by themselves and the interest and cooperation of people around them; on the other hand, people who fail halfway through do not have luck in an environment where they can maintain their motivation and thus are lacking in stimuli".

However, when looking around the world, despite the fact that there are numbers of information, products, and services related to methodologies (e.g., diet devices, diet foods, special exercise programs, etc.), there are almost no information, products, and services that support the continuation of efforts which is the essence of goal achievement. Accordingly, the inventor has reached the idea of the potential of "continuation support" business. Thereafter, to systematize a mechanism of continuation support, the inventor has studied elements for maintaining and boosting motivation, systematic realization methods, business models, etc., leading to the completion of the invention related to continuation support, including its application to various fields of not only diets but also learning/training, sports, etc.

### DISCLOSURE OF THE INVENTION

### PROBLEMS TO BE SOLVED BY THE INVENTION

The present invention is made in view of circumstances such as those described above. An object of the present invention is therefore to provide a novel and revolutionary system allowing to help individuals in self-realization and allowing companies and organizations to achieve an improvement in profitability and an improvement in customer satisfaction.

### MEANS FOR SOLVING THE PROBLEMS

According to a first aspect of the present invention, there is provided a continuous supporting system that supports continuous efforts made by a user to achieve his/her goal, the system comprising: a user information recording portion that records attributes of the user; a goal information recording portion that records information on an achievement goal of the user; and an actual accomplishment information recording portion that is associated with the goal information recording portion, records information on actual accomplishment of efforts of the user, and can be updated by the user. Then, based on at least data recorded in the actual accomplishment information recording portion, when the actual accomplishment of efforts has not been updated by the user for a predetermined period of time, a first message to call attention is sent to the user.

According to a second aspect of the present invention, there is provided a continuous supporting system that supports continuous efforts made by a user to achieve his/her goal, the system comprising: a user information recording portion that records attributes of the user; a goal information recording portion that records information on an achievement goal of the user; an actual accomplishment information recording portion that is associated with the goal information recording portion, records information on actual accomplishment of efforts of the user, and can be updated by the user; and a message recording portion that records a second message to be provided to the user or other users. Then, the second message recorded in the message recording portion is allowed to be displayed on a website.

### EFFECT OF THE INVENTION

A business model realized by the present invention can be operated as a service provider on the Web and does not require an increase in the number of employees in proportion to an increase in the number of users. Hence, a transformation to a business model that improves profits at an accelerated pace by an increase in the number of users is enabled.

As the word "quitter" implies, conventionally, it is a public common sense that even if ones make up their minds to start something, the vast majority of them fail halfway through. If the continuous supporting system by the present plan can be put into widespread use, people who are busy with daily affairs and thus tend to forget their goals and motivation therefor are reminded of their goals and thus are given an opportunity to maintain and boost their motivation. As a result, the number of people who reach their individuals' goals can be increased. For example, such an effect can be expected that a person who has been unable to continue a diet only by his/her will is able to reach his/her target weight without losing his/her willingness for continuation.

Also, for business operators that run their businesses by income such as membership fees, such as cram schools, preparatory schools, gyms, correspondence education, corporate training, e-learning systems (training/education systems using communication lines) which exist in large numbers in the market, by reducing the probability that customers fail halfway through, by the continuous supporting system, the number of customers is maintained and thus an effect of increasing profitability can be provided. In addition, since making customers continue their efforts leads to achieving better results, customer satisfaction can be improved. Also, by using productive results, evidence for appealing for the superiority of one's own methods can be provided.

As such, the continuous supporting system according to the present invention has business content that allows to help individuals in self-realization and allows to provide companies and organizations with an improvement in profitability, an improvement in customer satisfaction, etc., and thus has high social significance.

### BEST MODE FOR CARRYING OUT THE INVENTION

The present invention provides a "continuous supporting system" for maintaining/boosting motivation. The continuous supporting system is roughly composed of a rooting event function (Web application function); a reminder function (rescue email function); a rival function; and a message function. As will be described later, a number of functions for psychologically stimulating motivation, such as a "rooting request" function that asks family members, a boyfriend, a girlfriend, etc., for rooting are implemented. When a record is kept in a blog, a diary site, etc., in addition to an actual effort action, the task of keeping a record in a blog, a dairy site, etc., may become another burden. However, the continuous supporting system is completely differentiated from a blog, a dairy site, etc., in terms of that the continuous supporting system provides gizmos all over to stimulate user's motivation.

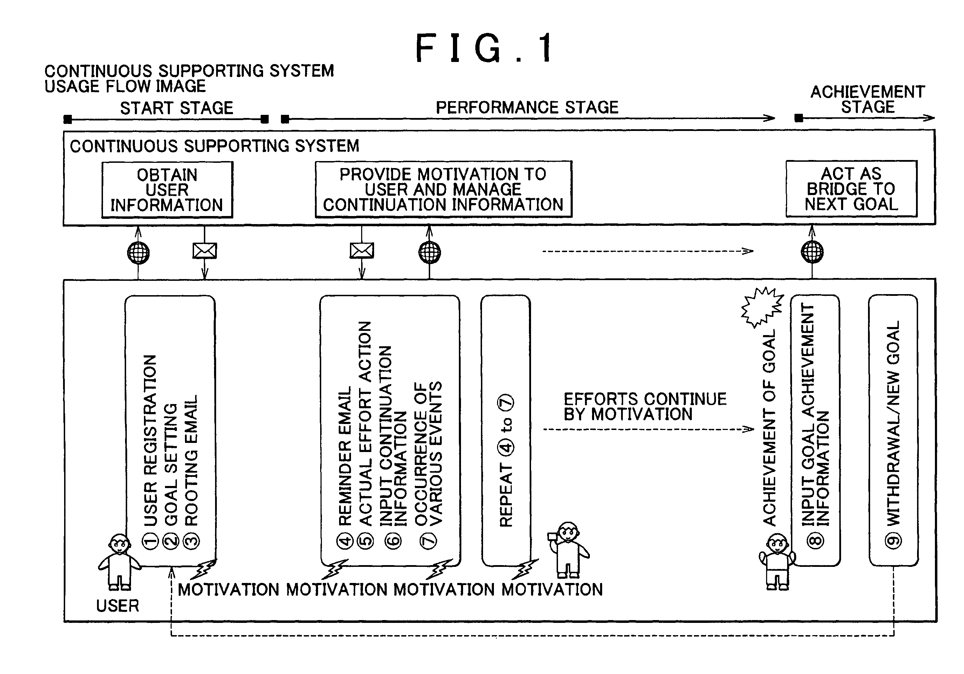

The best mode for carrying out the present invention will be described in detail below using embodiments. FIG. 1 is an illustrative diagram showing an overall usage image of a continuous supporting system according to the present invention. In the continuous supporting system of the present invention, first, user information is obtained and thereafter motivation is provided to a user and continuation information is managed. Then, the system acts as a bridge to a next goal. Specifically, at the stage of obtaining user information, information on the user, the setting of a goal, etc., are performed on a website. Once the system actually begins running, user's goal achievement is supported by a method such as sending a reminder email to the user. Thereafter, when the user successfully achieves his/her goal, the achievement is admired.

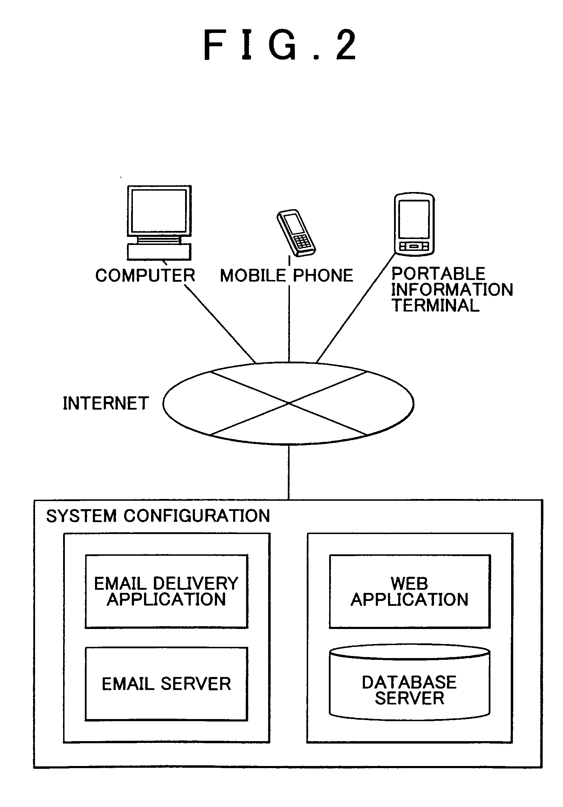

FIG. 2 schematically shows a configuration of the continuous supporting system according to the present invention. The system includes an email server, an email delivery application, a Web application, and a database server. Such a server system is connected to a user's computer, mobile phone, and portable information terminal via a communication line such as the Internet.

In FIG. 2, the "email delivery application" is an application portion that serves to send out rival update notification emails and rescue emails. The email delivery application inquires the database server about a user to whom an email is to be sent, etc., and thereafter, creates an email by data processing of a destination, a subject, a body, etc., and sends the email through the email server.

The "email server" is a server that performs a process of delivering emails to the Internet in functions such as rival update notification emails, rescue emails, and message receipt notification emails.

The "Web application" is an application portion that provides interfaces and functions to use the continuous supporting system by the user using a Web browser. The "Web application" has a Web server function and an application function that executes business logic. For data required for each function which will be described later, an inquiry is made to the database server. In a function of sending an email by an operation on a Web browser (a message receipt notification email, etc.), an email is sent through the email server.

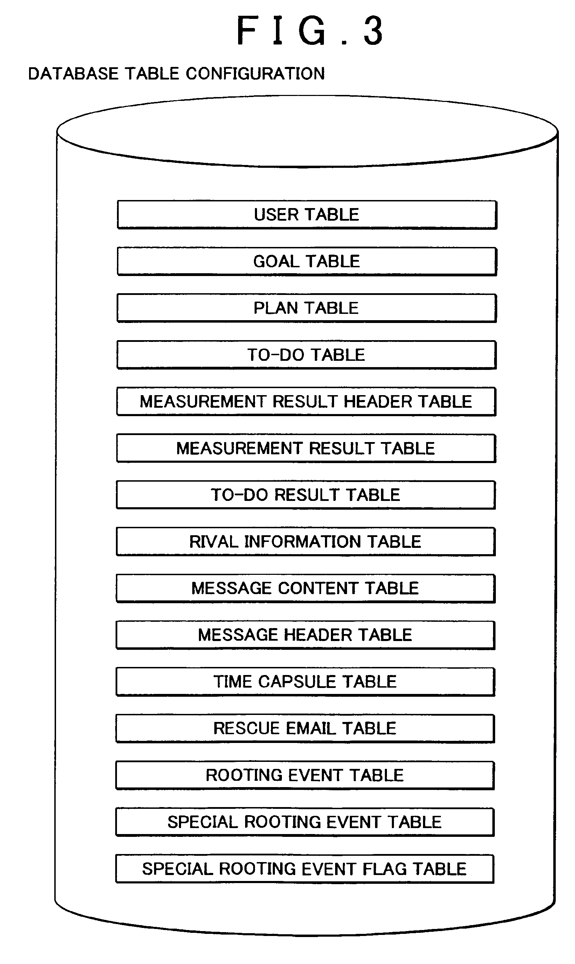

The "database server" is a server that integrally manages data that needs to be permanently saved in the continuous supporting system. For details of a database, see a "database table configuration" shown in FIG. 3.

The continuous supporting system according to the present invention can be classified into the following functions.

### (Reminder email function)

A reminder email function is a function of sending a user an email with content, such as calling attention, when continuous efforts of the user stop for a certain period of time. This function can also include delivery of an email asking a third person for a rooting message to the user. Messages used in this function are messages (emails, etc.) sent via a network such as the Internet.

The reminder email function is an important function of the continuous supporting system. Normally, for reasons for one to fail as a result of not being able to continue efforts, one often falls into a pattern in which with busy daily life and affairs he/she tends to forget his/her goal and thinks "skip it just for today" but "today", a day, turns into two days and then three days and he/she ends up feeling like "I'll give up". In the situation where the user is going to fail, it is difficult to expect the user to perform an active action such as accessing a Web application function which will be described later, and thus, the system needs to actively act on the user by using a medium (email) by which information can be pushed from the system to the user. The reminder email function plays this role.

The reminder email function is, as with a Web application function which will be described later, dynamically created based on various information on user's attributes, the number of performances/the frequency of performance, the degree of difficulty of a goal, a history of operations up to that point, etc., and is sent at timing set by the user. To optimize provision of motivation to individual users, the content completely differs in how to encourage, how to tell about a goal reaching level, how to praise, how to phrase things, etc., between, for example, a woman in her twenties who has just started efforts and performed an update every day and a man in his thirties who has continued efforts for three months but has not performed an update for the last one week. Note that message content of a reminder email can also be created by the user him/herself.

When a reminder email is created by the server, the content of a motivating email can be dynamically created taking into account the following contents (1) to (8). By a push-type communication means such as an email, a motivating stimulus is periodically sent to the user.
(1) User's attributes (age, gender, and others) and personality judgment
(2) A period of time elapsed from the start of performance
(3) The degree of actual accomplishment of performance, a response rate, and evaluation for rooting
(4) The level of a goal, the magnitude of the difference between the current state and the goal, the difficulty of realization, etc.
(5) Trend and tendency of operations, records, etc.
(6) Time of year, a day, a season, weather, a region, etc.
(7) A rival's update trend
(8) Encouraging messages from others (a community, family members, a boyfriend, a girlfriend, etc.)

Here, examples of email content created by the server include common content, such as calendar information, sayings, and traditions, and dynamic content. For the dynamic content, items (1) to (7) such as those shown below can be adopted.
(1) Reporting actual accomplishment
(2) Encouraging (praising, inspiring, spurring, etc., based on information)
(3) Reminding the user of his/her original intention.
(4) Making the user imagine success which will be obtained at the end of continuation (image training)
(5) Rousing the user from a negative image where the user fails
(6) Reminding the user of his/her self-gift.
(7) Providing information such as information that can only be viewed on specific date and condition, etc.

An example of message creation logic will be described. First, attributes, states, etc., of an individual are formed into patterns and a database is created in which optimal messages for providing motivation are accumulated for the respective patterns (Step 1). Then, by using parameters such as those shown below, the individual is put into a certain pattern (Step 2).
(1) User's attributes (age, gender, single/married, and others)
(2) Results of personality judgment
(3) Collected results of psychological information on the system (ex. a result of an input such as feelings upon operation - happy, tough, etc.)
(4) A period of time elapsed from the start of performance
(5) Continuation records (frequency, the number of times, etc.)
(6) A target date and the number of days remaining until the target date
(7) The level of a goal, the magnitude of the difference between the current state and the goal, the difficulty of realization, etc.
(8) The frequency of access to the system and a history of operations performed on the system, such as rooting for other users

Then, an optimal message is obtained from the database, based on pattern information of the individual (Step 3). Here, to prevent messages with the same content from being repeatedly created, a plurality of messages are registered for each pattern in the database and a character string of an extraction destination is randomly changed. Also, those character strings that have been previously used for the individual are configured not to be used for a certain period of time.

Then, variable character strings (items similar to the parameter items) in message character strings are replaced with information on the individual (Step 4). By a mechanism of Steps 1 to 4 such as those described above, a message is created.

### (Rival function)

A user performs a "rival setting" on another user of interest, e.g., a user with the same goal and the same level, so that each time another user updates his/her record, the user is notified of it. Also, this is a function to stimulate competitiveness by the user receiving a notification that another person has performed a rival setting on the user. The detailed content and procedure will be described later.

### (Message function)

This is a function of allowing a user to send a message to him/herself or other users. For example, when a message is sent, a "time capsule" function can be added that saves the message such that a message body cannot be viewed unless a set effort condition is achieved. Note that a "message" used in this function is, unlike a message in the reminder email function, a message that is mainly saved on the system's server and is only viewable in the system. The detailed content and procedure will be described later.

### (Rooting event function: Web application function)

A user makes user registration on the Web. First, the user sets a final goal, a time limit, a self-gift for success, etc., and sets an effort goal for realizing it. If what the user does is only recording, it is no different from a blog or a dairy site, but the continuous supporting system incorporates various "events" to boost user's motivation each time an operation is performed at a key point, such as login to the system or saving of a performance record. For example, when the user saves the first performance record, a message is returned which says that the fact that the user has made up his/her mind and started efforts is admired and the continuous supporting system roots for future efforts. As such, system use by the user is all performed in an interactive manner.

Such an event is dynamically created based on various information on user's attributes, the number of performances/the frequency of performance, the degree of difficulty of a goal, and a history of operations up to that point, etc. Thus, the user cannot anticipate in advance each day what event occurs with what operation, until he/she actually performs an operation. Events (messages by text, audio, or a moving image to the user) to be created by the continuous supporting system basically have content that boosts motivation for continuing efforts, such as "praising", "admiring", "reminding the user of his/her original intention", and "making the user have a success image". Since unexpectedness is added to such content, the user can accumulate a small sense of achievement and can enjoy continuous efforts and use of the system as if he/she were playing a game.

The rooting event function can have a flow such as that shown below.
(1) When a user accesses, he/she is praised for his/her continuation.
(2) When the user inputs an actual accomplishment, he/she is praised (a comment, audio, a moving image, etc.)
(3) When the user inputs an actual accomplishment, he/she can check the degree of achievement up to that point (a puzzle is filled, etc.)
(4) The user sees his/her rival's trend and thereby receives a stimulus.
(5) The user sees messages from others and thereby receives a stimulus.
(6) The user can also exchange information in a community with users having the same goal.

(1) The user accesses a site with interest.
(2) The user makes user registration in the system (fills in attributes, personality judgment, etc.).
(3) The user sets a goal.
(4) The user receives a motivating stimulus and
(5) Continues efforts every day.
(6) The user accesses the Web to input and record an actual accomplishment.
(7) Daily trend information is accumulated in the system.
(8) Based on the accumulated information, more effective motivation can be provided.

When the number of users increases, the actual running period increases, and accordingly more information on a pattern-by-pattern basis is accumulated, the system can be grown into one that can provide more intelligent motivation.

It is desirable that motivation on the Web include stimulus events to prevent it from falling into a rut. A stimulus event can be created by performing an operation on the Web, for example, as follows:
(1)A motivating message is displayed to a user having accessed the system immediately after the user logs in.
(2) After the user fills in continuous information, a message praising his/her continuation is displayed. Also, advice to encourage next continuation is provided. Various types of events are prepared to make the user feel fun. For example, messages reading "Turned into a quitter", "Commemorate 10-day continuation", and "Commemorate 30th continuation". Also, a time capsule is allowed to open when an opening condition is satisfied.

A server to be adopted in the system according to the present invention can adopt the table configuration shown in FIG. 3. Details of each table are shown in FIGS. 4 to 11. Of them, FIGS. 4 to 7 show data tables related to a first embodiment of a diet case. FIGS. 8 to 11 show data tables related to a second embodiment of an English conversation certification test case. Although the database structure itself is basically the same between the first and second embodiments, the content differs therebetween.

### 1. User table (user information recording portion)

A "user table" is a table for saving user's personal attribute information and user setting items (a rival update notification email and a rescue email).
The user table not only includes a "user ID", a "user name", a "password", a "name", and an "email address" but also includes a "send frequency of rival update notification email field" and a "next send date for rival update notification email field" as fields for managing information for automatically sending at regular times an email notifying the user of an update performed by a person set as a rival. Here, in the "send frequency of rival update notification email field", a number indicating the number of days is saved. For example, when "3" is set, the setting is such that a notification is provided every three days as to whether an update is performed by a person set as a rival. That is, it is the "frequency in the number of days in which it is checked whether an update is performed and then a notification is provided".
Also, in the "send frequency of rival update notification email field", an expected date on which a next update is checked and a notification is delivered is saved. Upon batch processing, this field is used as a search criterion (to search for a today's processing target). In this field, when the user performs a setting or when notification batch processing is operated, the system computes an expected date on which next execution is performed, and inputs the expected date.

### 2. Goal table (goal information recording portion)

A "goal table" is a table for saving goals set by a user. The goal table has fields that respectively save a goal ID, a user ID, and a goal value. The goal table is associated with the "user table" by the "user ID".

### 3. Plan table (goal information recording portion)

A "plan table" is a table for saving "rules" for short-term goals into which a goal is broken down. The plan table has fields that respectively save a plan ID, a user ID, a rule 1 (term), a rule 2 (condition), a rule 3 (gift), a start date, and an end date.
Also, to enable to distinguish which plan has a high continuation rate and which plan has a high degree of effectiveness, each history is saved as a record. A plan has information on a term by a start date on which the plan is applied and an end date. In a plan being currently used, its end date is blank. The plan table is associated with the "user table" by the "user ID".

### 4. To-do table (goal information recording portion)

A "to-do table" is a table for saving specific action goals. To each action goal, points for when the action is performed can be assigned. The to-do table has fields that respectively save a to-do ID, a plan ID, an action (to-do), and points. The "to-do" has association as to which plan it belongs to and thus it can be seen what kind of "to-do" has been registered in which plan. The to-do table is associated with the "plan table" by the "plan ID".

### 5. Measurement result header table

A "measurement result header table" is a table for saving management header information of a daily measurement item. The measurement result header table has fields that respectively save a measurement result header ID, a plan ID, a user ID, a date, and a comment. In the measurement result header table, data on an entry-a-day basis is also saved, but for individual measurement items, in order that the increase and decrease in the number of items can be handled, actual measurement result data is saved in the following measurement result table. The measurement result header table is associated with the "plan table" by the "plan ID", and the "user table" by the "user ID".

### 6. Measurement result table (actual accomplishment information recording portion)

A "measurement result table" is a table for saving a daily measurement item. The measurement result table has fields that respectively save a measurement result ID, a measurement result header ID, and a goal value. The measurement result table is associated with the "measurement result header table" by the "measurement result header ID".

### 7. To-do result table (actual accomplishment information recording portion)

A "to-to result table" is a table for saving a result as to whether or not daily "to do" is performed. The to-do result table has fields that respectively save a plan ID, a measurement result header ID, a to-do ID, and a result. The to-do result table is associated with the "measurement result header table" by the "measurement result header ID", the "user table" by the "user ID", and the "plan table" by the "plan ID".

### 8. Rival information table

A "rival information table" is a table for saving information on a user set as a rival. The rival information table has fields that respectively save a rival information ID, a user ID, a rival's user ID, an unread flag, and a rival's last update date/time. When a person set as a rival updates information, data units in the "rival's last update date/time" and "unread flag" fields are changed. The rival information table is associated with the "user table" by the "user ID" and the "rival's user ID".

### 9. Message content table

A "message content table" is a table for saving message body information. One message corresponds to one record and for this data, common data between a sender and a recipient is used. The message content table has fields that respectively save a message content ID, a sender's user ID, a recipient's user ID, a subject, a body, and a sent date/time. The message content table is associated with the "user table" by the "sender's user ID" and the "recipient's user ID".

### 10. Message header table

A "message header table" is a table for saving information indicating which message box a certain message is saved in. The message header table has fields that respectively save a message header ID, a message content ID, an owner's user ID, a user type, a save folder ID, an unread flag, and a delete flag. Unlike the "message content table" table in which common data is referred to by both a sender and a recipient, the message header table is structured such that one record is saved for a sender and one record is saved for a recipient, respectively. To distinguish categories of an owner and a sender/recipient of each individual record, the "owner's user ID" and "user type" fields are prepared. Also, an unread/read determination flag and a flag for when deleted are prepared. The message header table is associated with the "message content table table" by the "message content ID".

### 11. Time capsule table

A "time capsule table" is a table for saving time capsule information to be added to a message. The time capsule table has fields that respectively save a time capsule ID, a message header ID, a time capsule type (a due date or the number of continuations), a cancellation condition (date), a cancellation condition (the number of times), and a flag. The time capsule table is associated with the "message header table" by the "message header ID".

### 12. Rescue email (reminder email) table

A "rescue email table" has fields that respectively save a rescue email ID, a user ID, a send condition (days), message content, a send condition for others (days), a destination of others (email address), a condition defined flag for others, a key, and an expiration date.

### 13. Rooting event table

A "rooting event table" is a table for saving information to obtain praising words (a "message content" field) used for a rooting event and a file name of a moving image (a "file name" field), based on information on a "praising pattern ID" obtained by encoding a praising pattern determined by the input of a measurement result and the number of updates to a "to-do", "gender", and an age (an "age range (start)" and an "age range (end)").

### 14. Special rooting event table

A "special rooting event table" is, in a "special event" (playback of a moving image for rooting by a celebrity, etc.) that occurs when a certain condition is satisfied within a certain period of time, a table for saving information to obtain the number of updates required for the special event to occur, praising words used for the event (a "message content" field), and a file name of a moving image (a "file name" field), based on the current date.

### 15. Special rooting event flag table

A "special rooting event flag table" is a table for saving information based on which it is determined whether a specific special event has not yet occurred or has already occurred for a given user. The special rooting event flag table is associated with the "user table" by the "user ID", and the "special rooting event table" by the "special event ID".

Next, a procedure for each function of the present invention will be described.

### = Reminder email function (rescue email function) =

### A: Rescue email setting

1. A user accesses a setting screen to display a screen
2. A condition for after how many days of no updates a rescue email is to be sent to the user is set (e.g., 7 days).
3. Message content is specified. The message content can be selected between one that is automatically created by the system and one obtained by the user writing a sentence by him/herself and specified.
4. A condition for after how many days of no updates a rooting request email is to be sent to others is set (e.g., 10 days).
5. Input data is saved in the rescue email table on the server.
6. When a rooting request to others is set, the following operations are performed.
   1) Information on a key (unique character string) to identify a record in the rescue email table is generated and a body of a rooting request email is created.
   2) The email created in the step 1) is sent to an email address specified in the "destination of others".

### B: Rooting approval request

1. A third person who has been requested for rooting receives a rooting approval request email. When approving the rooting, a URL in a body is clicked.
2. A record in the rescue email table is identified from information on a key included in parameters of the rooting approval URL.
3. If it is within an expiration date, then a "condition defined flag for others" is changed to defined.
4. If it is after the expiration date has passed, then an "expired" message is created.

### C: Operation of a rescue email (to a user)

1. It is determined by a notification from a timer that an arbitrary setting time has reached.
2. The rescue email table, the user table, and the measurement result header table are searched in a consolidated manner for users who have not performed an update for a longer period of time than their respective send conditions of a rescue email to a user.
3. The following processing loop is performed on each of the users.
   1) When a message to the user is specified, a body is created based on the content thereof.
   2) When a message to the user is not specified, the system automatically creates a body.
   3) An email is sent to an email address obtained in the step 2).

### D: Operation of a rescue email (to others)

1. It is determined by a notification from a timer that an arbitrary setting time has reached.
2. The rescue email table, the user table, and the measurement result header table are searched in a consolidated manner for users who have not performed an update for a longer period of time than their respective send conditions of a rescue email to others whose settings are defined. Then, the following processing loop is performed on each of the users.
   1) A key (unique character string) to identify a record in the rescue email table is created.
   2) A body of a rooting request rescue email is created.
   3) An email is sent to an email address obtained in the step 2).

### = Rival function =

### A: The setting of rivals (specification of rivals)

1. Based on an input by a user, other users (rivals) that match criteria specified by the user are searched for. Specifically, the following operations are performed.
   1) Based on received search criteria, users and an update table are searched.
   2) Public pages of users that match the search criteria are displayed.
2. When the user specifies those other users that match the search criteria, as rivals (execute a "rival setting" button), user IDs of the rivals are saved in the "rival information table".

### B: The setting of the rival function (the send frequency of a rival update notification email)

When a user displays a user setting page from a user setting page and sets the send frequency in the setting of a rival update information notification email to an arbitrary number of days (e.g., 3 days), a next send date which is computed based on information on a specified value of the send frequency, the send frequency, and the current date of a received email is saved in the user table.

### C: Operation of the rival function (display of my page)

1. When a user logs in, the user table is searched based on authentication information to identify a logged-in person.
2. The rival information table of the logged-in person is searched to extract set rivals.
3. It is determined whether the latest update information of the set rivals is unread.
4. The display format is separated by whether the information is unread or read and rival information is displayed on my page. For example, a rival box where there is unread update information of a rival can be distinguished by display such as a highlight color or an icon. The "my page" as used herein refers to a user's initial display page to be displayed immediately after login. The "update information" as used herein refers to a daily input item (e.g., weight, body fat, a performance item, or a comment section).
5. When the user selects arbitrary rival information, the user table is searched for a profile of a selected rival.
6. Continuation/plan/measurement result information of the selected user is obtained from corresponding tables.
7. An unread check in the rival information table is changed to read.
8. A public page of the selected user is displayed.

### D: Operation of the rival function (update to unread/read and the last update date/time)

1. When a user inputs a performance record on my page, the performance record is saved in a "performance history table".
2. Records in the "rival information table" where the operating user is set as a rival are searched for.
3. Corresponding unread flags are changed to "unread" and corresponding last update dates/times are changed to the current date/time.
   By this process, the fact that information on a user set as a rival has been updated can be detected.

### E: Operation of the rival function (rival update notification email)

1. It is determined by a notification from a timer that an arbitrary setting time has reached.
2. The user table is searched for users whose respective send dates in the setting of a rival update information notification email match each other.
3. The following process is looped on each of the users.
   1) Set rivals who have performed an update within the setting of send frequency (the number of days) are searched for.
   2) Based on information on the rivals, a body of a rival update notification email is created.
   3) The body created in the step 3) is sent by email to an email address obtained in the step 2).
   4) A corresponding next send date in the user table is updated to a date which is computed based on a specified value of send frequency and the current date.

### F: The setting of rivals (cancellation of a rival)

1. A rival's user public page is accessed.
2. The user table is searched for a profile of a selected rival.
3. Continuation/plan/measurement result information of the selected user is obtained from corresponding tables.
4. A corresponding unread check in the rival information table is changed to read.
5. When a public page of a user set as a rival is displayed, a "rival cancellation" button is created.
6. A user public page of the rival is browsed and the "rival cancellation" button is executed.
7. A record of a user ID of the cancelled rival is deleted from the "rival information table".

### = Message function =

### A: Creation and sending of a message (the setting of a time capsule)

1. Message content (a subject, a body, etc.) is inputted on a message send screen.
2. A time capsule opening condition is selected from among a date and the number of continuations (actual accomplishment).
   1) When the opening condition is a date, an opening date is set.
   2) When the opening condition is the number of continuations, a number of continuations is set. The number of input operations for a recording item (one time a day maximum) is counted.
   3) An operation of sending a message is performed.
   4) A record is created for received data (message content) in the message content table.
   5) A record is created in the message header table.
   6) A record is created in the time capsule table.
   7) An email address is obtained from the user table using a destination user ID as a condition.
   8) An email of a message receipt notification is sent to the obtained email address.

### B: Notification of an unread message/locked time capsule on my page (immediately after login)

1. When a login operation is performed, the user table is searched based on authentication information to obtain a user ID of a logged-in person.
2. The message header table is searched using the user ID of the logged-in person to determine whether there is an unread message(s).
3. When there is an unread message(s), display of "You have unread message(s)" is performed.
4. The time capsule table is searched using the user ID of the logged-in person to determine whether there is an locked time capsule(s).
5. When there is a locked time capsule(s), after the message in the step 4, a number of time capsule icons that corresponds to the number of locked time capsules are displayed.
6. My page is displayed.

### C: Notification of an unread message/locked time capsule on my page (the operation of moving to my page)

1. Based on user ID information of a user obtained at login, the message header table is searched to determine whether there is an unread message(s).
2. When there is an unread message(s), display of "You have unread message(s)" is performed.
3. The time capsule table is searched to determine whether there is a locked time capsule(s).
4. When there is a locked time capsule(s), after the message in the step 3, a number of time capsule icons that corresponds to the number of locked time capsules are displayed.
5. My page is displayed.

### D: Display of a list of received messages

1. Based on a user ID of an operating user, the message header table is searched.
2. When the operating user is a recipient, the message content table is searched for a list of header information of messages saved in an inbox. Also, the time capsule table is searched for a list of information on subjects, sent dates/times, and senders. Then, a list of information on whether there is a time capsule(s) and whether the time capsule(s) is(are) unlocked/locked is obtained.
3. The following process is looped on each of the message list information.
   1) When a set time capsule cancellation condition is not satisfied, an icon indicating that an unopenable time capsule is set is displayed for a corresponding email.
   2) When a cancellation flag is locked, the flag is changed to unlocked.
   3) When a set time capsule cancellation condition is satisfied, an icon indicating that an openable time capsule is set is displayed for a corresponding email.
   4) When a time capsule is not set, a message with no time capsule icon is displayed.
4. A list is created by combining each message information and time capsule information.
5. A list of received messages is displayed.

### E: Detailed display of an individual message

1. When a user selects any one from a list of received messages, the following operation is performed.
   1) When a time capsule is not set in the selected message, a detailed screen of the selected message is displayed.
   2) When an unlocked time capsule is set in the selected message, a detailed screen of the selected message is displayed.
   3) When a locked time capsule is set in the selected message, a message indicating that the message cannot be opened because of a time capsule, and a remaining cancellation condition (the number of days or the number of performances) are displayed. For the message indicating that the message cannot be opened, for example, "Cannot be opened unless and until you continue another two times", "Cannot be opened until August 31, 2007", etc., can be adopted. The number of remaining performances as a remaining cancellation condition can be obtained by calculation: the number of updates after the sent date/time is subtracted from the number of performances specified upon sending a message with a time capsule.

### = Rooting event function =

When there are inputs of a performance item and a measurement result, based on data thereof the process is branched as follows on the server.
1. The performance item is saved in the "to-do result table" and the measurement result is saved in the "measurement result header table" and the "measurement result table".
2. In any of the following cases, a rooting event process is performed.
   1) Upon saving for the first time on a day
   2) When there are inputs performed on the same date and when points are increased upon saving
3. Based on a file name and message content which are results of an inquiry to the special rooting event table or the rooting event table, a praising response screen is created.
4. The praising response screen is displayed.

It is an illustrative diagram showing an example of an application mode of the continuous supporting system according to the present invention. The continuous supporting system according to the present invention can be applied to various fields; for example, personal diets, entrance/certification exams by individuals or at cram schools, learning by individuals or at language schools, and workouts by individuals or at gyms.

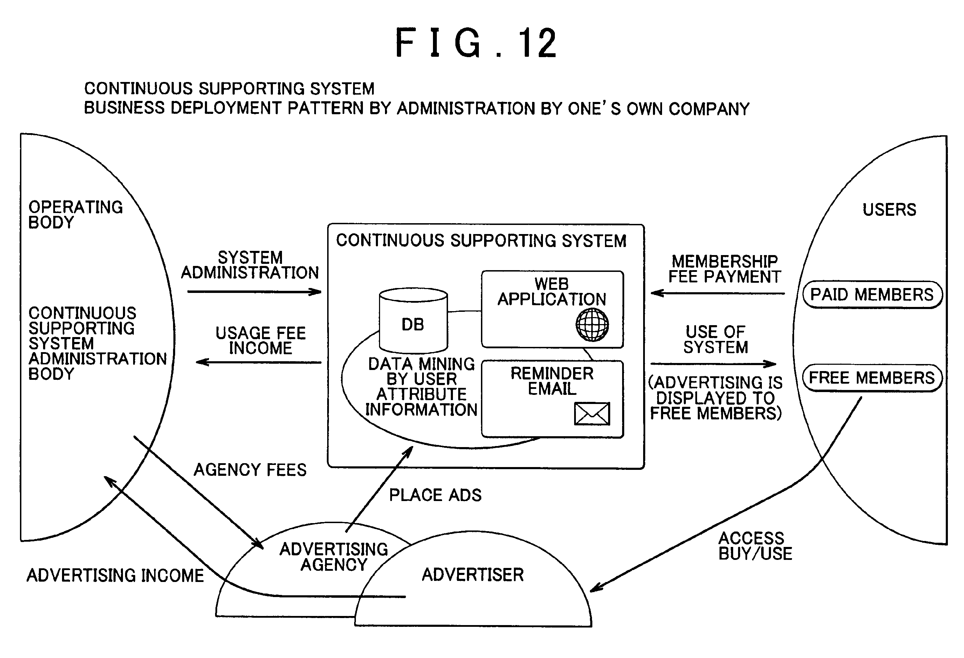

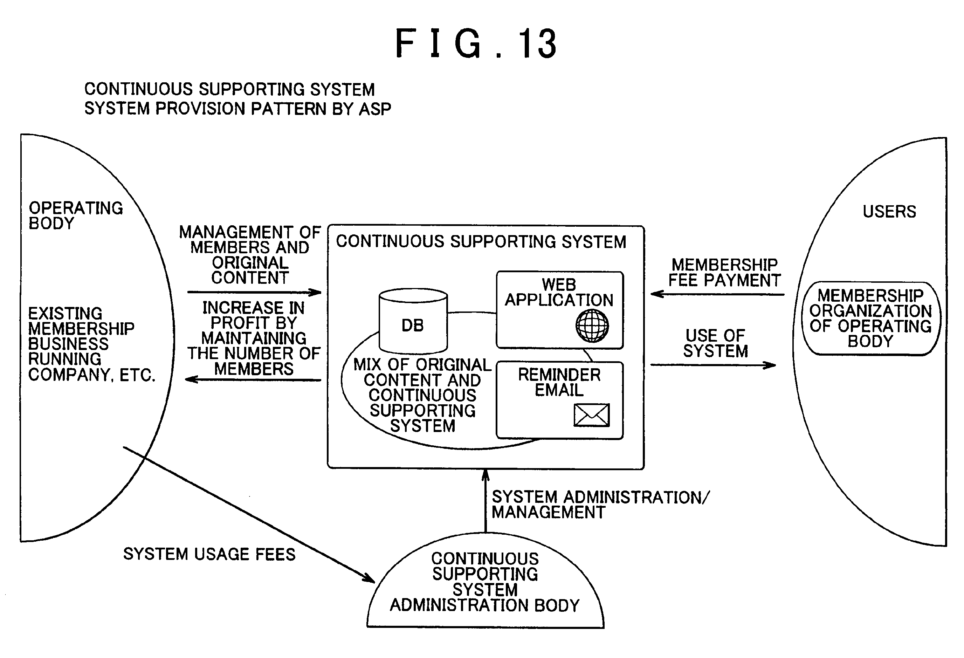

FIGS. 12 and 13 are illustrative diagrams showing examples of business deployment by the continuous supporting system according to the present invention.

Although the present invention is described above using the embodiments, the present invention is not limited to the scope of the embodiments. Needless to say, any design change can be appropriately made within the scope of the technical idea described in the claims. For the aforementioned reminder email function, not only emails but also messenger software, chat software, etc., can be adopted.

### BRIEF DESCRIPTION OF THE DRAWINGS

FIG. 1 is an illustrative diagram showing an overall usage image of a continuous supporting system according to the present invention;
FIG. 2 is an illustrative diagram (block diagram) showing a configuration of the continuous supporting system according to the present invention;
FIG. 3 is a block diagram showing a database structure of the continuous supporting system according to the present invention;

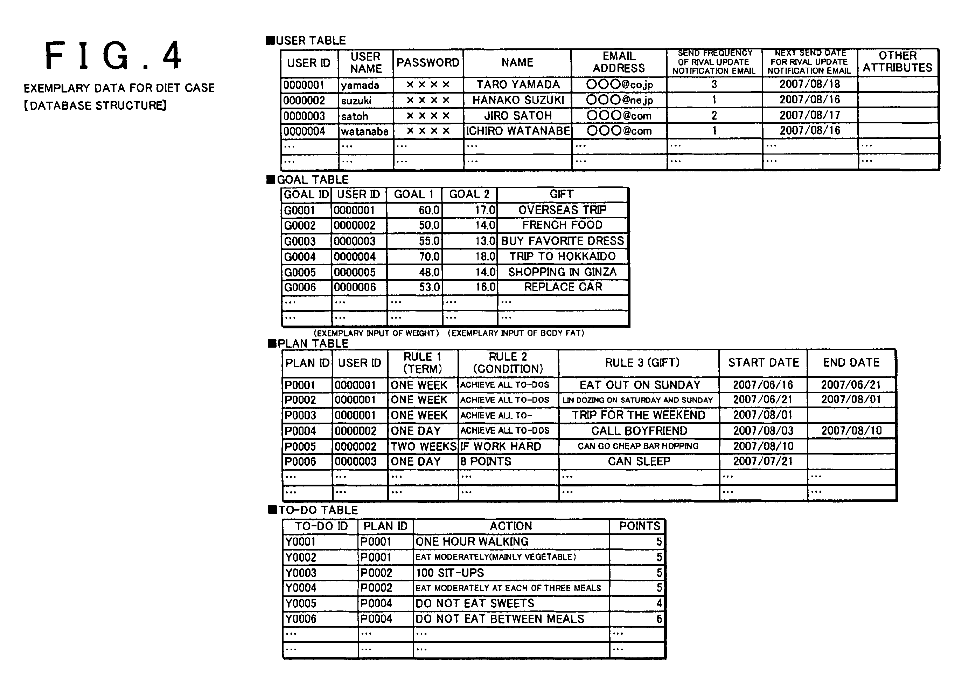

FIG. 4 is an illustrative diagram showing a part of a database structure of a continuous supporting system according to a first embodiment of the present invention;

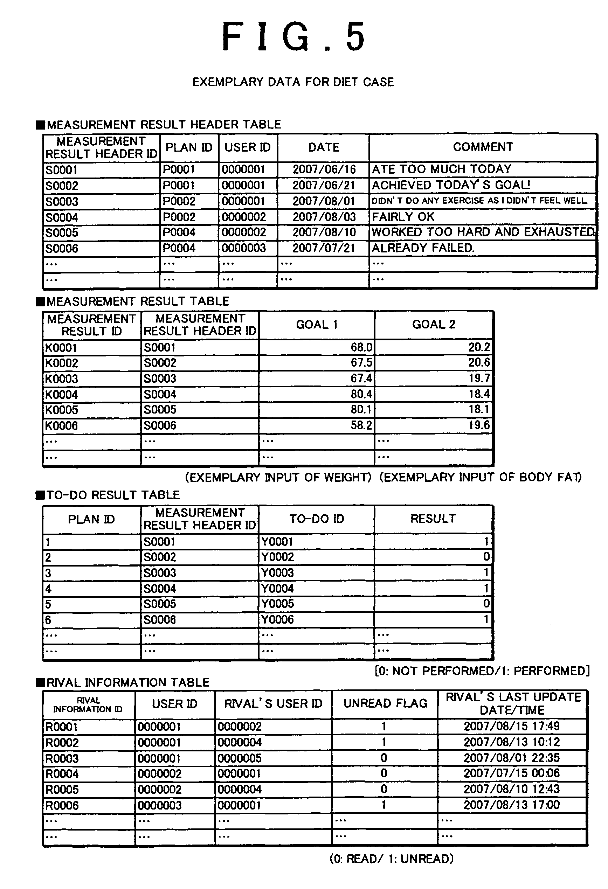

FIG. 5 is an illustrative diagram showing a part of the database structure of the continuous supporting system according to the first embodiment of the present invention;

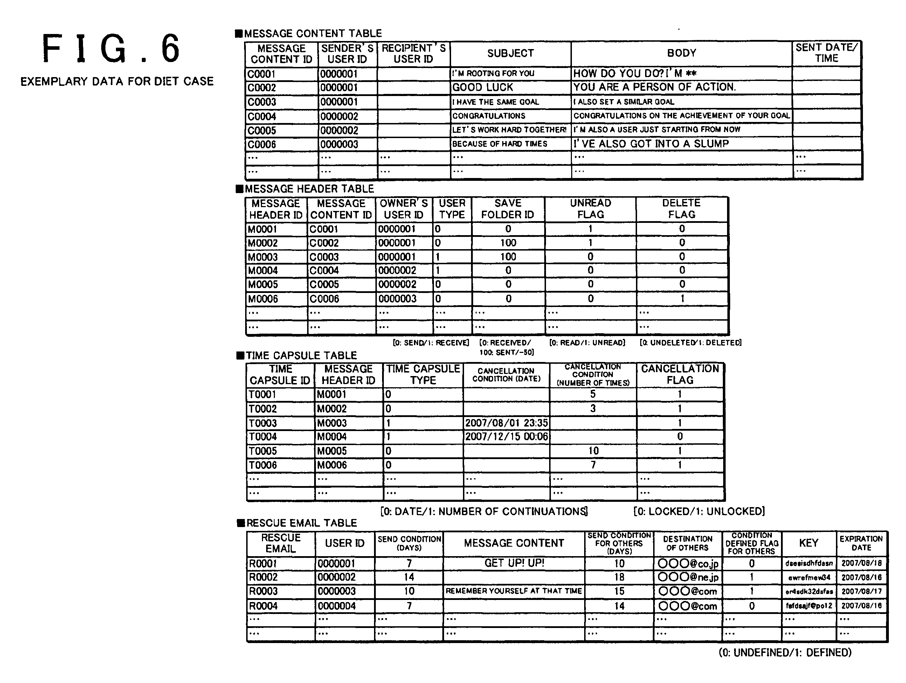

FIG. 6 is an illustrative diagram showing a part of the database structure of the continuous supporting system according to the first embodiment of the present invention;

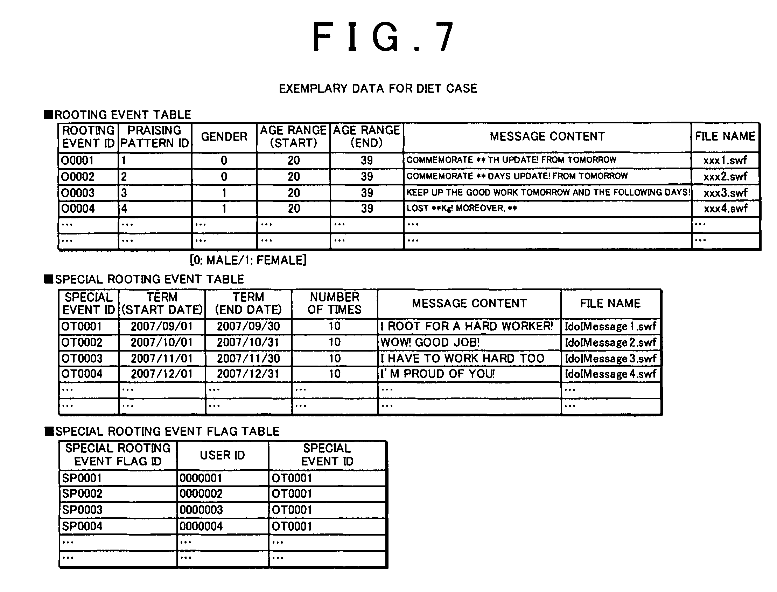

FIG. 7 is an illustrative diagram showing a part of the database structure of the continuous supporting system according to the first embodiment of the present invention;

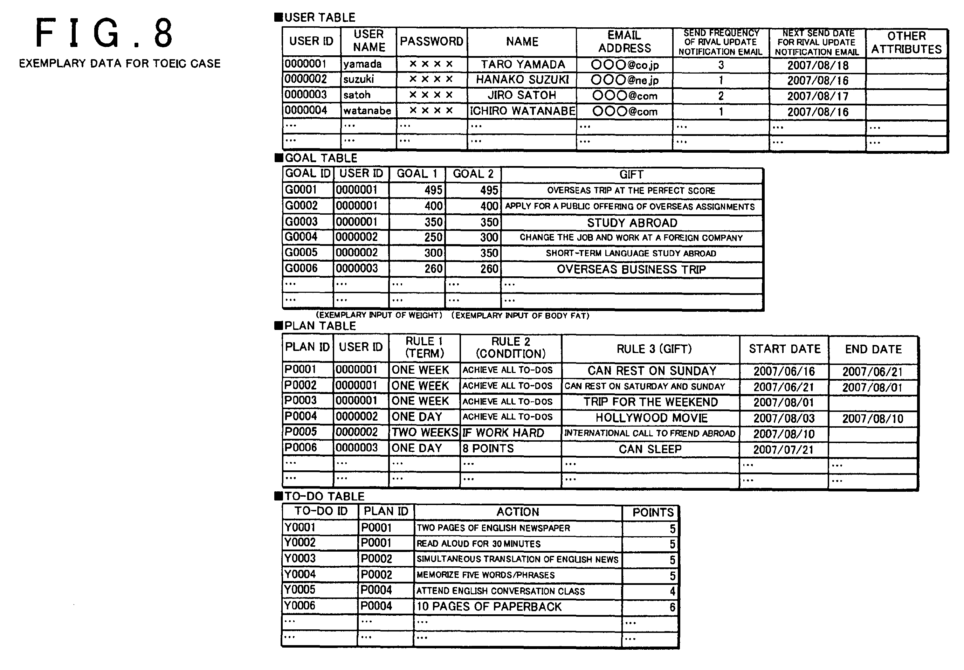

FIG. 8 is an illustrative diagram showing a part of a database structure of a continuous supporting system according to a second embodiment of the present invention;

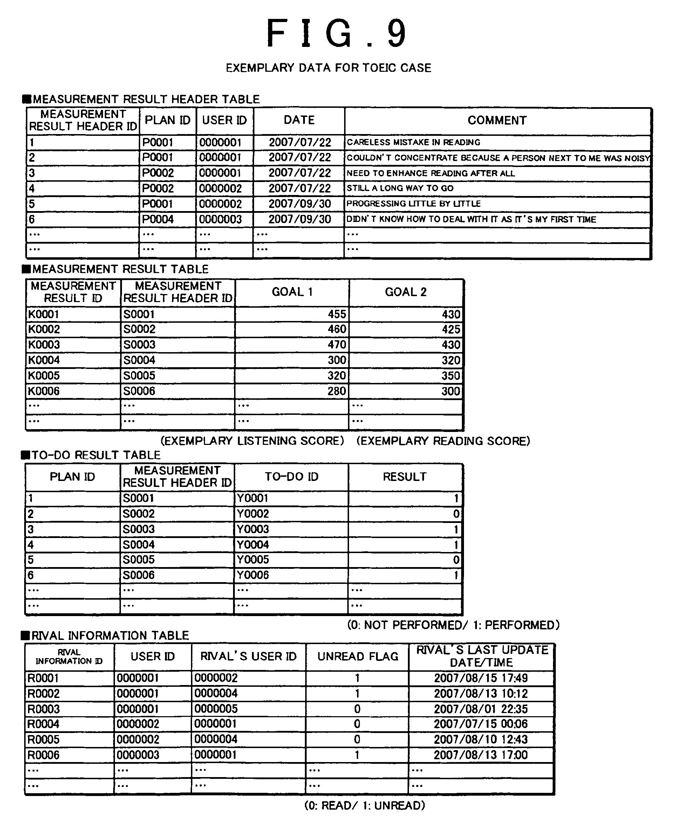

FIG. 9 is an illustrative diagram showing a part of the database structure of the continuous supporting system according to the second embodiment of the present invention;

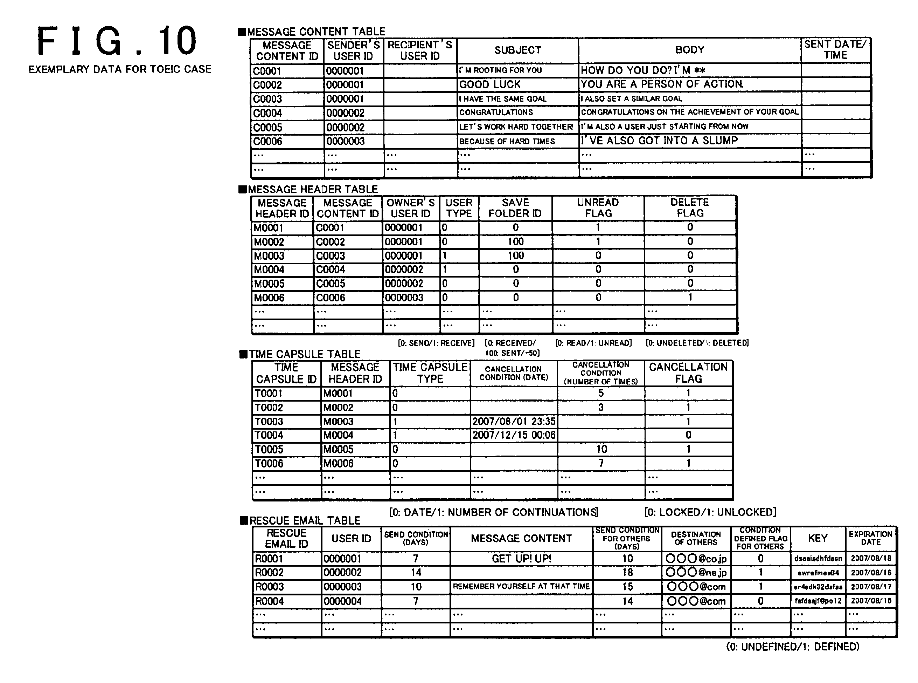

FIG. 10 is an illustrative diagram showing a part of the database structure of the continuous supporting system according to the second embodiment of the present invention;

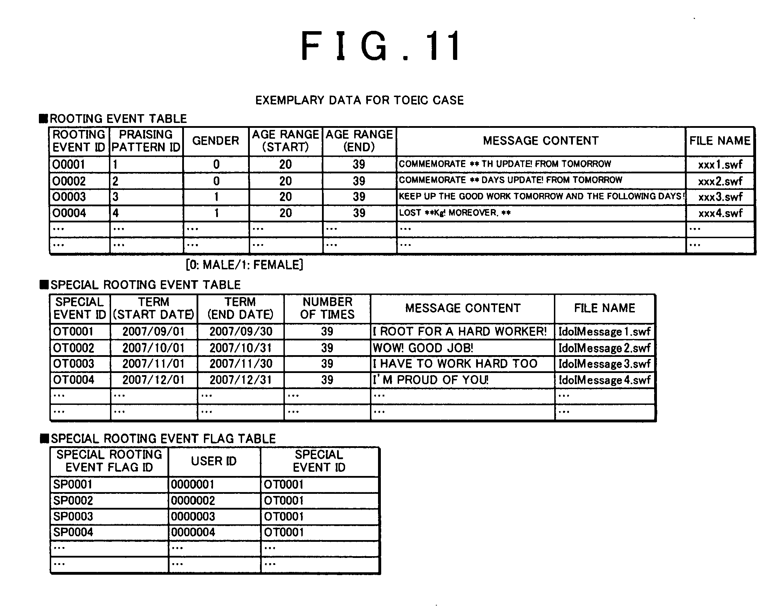

FIG. 11 is an illustrative diagram showing a part of the database structure of the continuous supporting system according to the second embodiment of the present invention;
FIG. 12 is an illustrative diagram showing an example of an application mode (business deployment) of the continuous supporting system according to the present invention; and
FIG. 13 is an illustrative diagram showing an example of the application mode (business deployment) of the continuous supporting system according to the present invention.

## Claims

1. A continuous supporting system that supports continuous efforts made by a user to achieve his/her goal, the system comprising:
a user information recording portion that records attributes of the user;
a goal information recording portion that records information on an achievement goal of the user; and
an actual accomplishment information recording portion that is associated with the goal information recording portion, records information on actual accomplishment of efforts of the user, and can be updated by the user, wherein
based on at least data recorded in the actual accomplishment information recording portion, when the actual accomplishment of efforts has not been updated by the user for a predetermined period of time, a first message to call attention is sent to the user.

2. The continuous supporting system according to claim 1, wherein
the user information recording portion records setting information on send timing of the first message in addition to information on the attributes of the user, and the send timing can be arbitrarily set by the user, and
the first message is sent based on the send timing recorded in the user information recording portion.

3. The continuous supporting system according to claim 2, wherein the setting information on the send timing recorded in the user information recording portion is one of a period of time during which an update is not performed and whether actual accomplishment is achieved within a certain period of time.

4. The continuous supporting system according to any one of claims 1 to 3, wherein content of the first message is dynamically created based on the attributes of the user recorded in the user information recording portion and a number of performances/a frequency of performance recorded in the actual accomplishment information recording portion.

5. The continuous supporting system according to any one of claims 1 to 4, wherein
the user information recording portion records information on other users present in the same system,
based on update histories of the other users in the actual accomplishment information recording portion, a third message to call attention is sent to the user, and
a link to a Web page where content of the third message can be displayed is attached to the third message.

6. The continuous supporting system according to any one of claims 1 to 5, further comprising an event information recording portion that records event information that can be displayed, when the user accesses a website of the system, on the website, wherein
the event information is dynamically created based on the attributes of the user recorded in the user information recording portion and a number of performances/a frequency of performance, etc., recorded in the actual accomplishment information recording portion.

7. A continuous supporting system that supports continuous efforts made by a user to achieve his/her goal, the system comprising:
a user information recording portion that records attributes of the user;
a goal information recording portion that records information on an achievement goal of the user;
an actual accomplishment information recording portion that is associated with the goal information recording portion, records information on actual accomplishment of efforts of the user, and can be updated by the user; and
a message recording portion that records a second message to be provided to the user or other users, wherein
the second message recorded in the message recording portion is allowed to be displayed on a website.

8. The continuous supporting system according to claim 7, further comprising an opening condition recording portion that records a condition for displaying the second message recorded in the message recording portion, on the website, wherein
the opening condition recording portion is associated with the actual accomplishment information recording portion, and
the second message recorded in the message recording portion is allowed to be displayed on the website, based on recorded information in the opening condition recording portion and the actual accomplishment information recording portion.

9. The continuous supporting system according to claim 7, wherein the condition recorded in the opening condition recording portion is a period of time elapsed from the recording of the second message in the message recording portion.

10. A continuous supporting system that supports continuous efforts made by a user to achieve his/her goal, the system comprising:
a user information recording portion that records attributes of the user;
a goal information recording portion that records information on an achievement goal of the user;
an actual accomplishment information recording portion that is associated with the goal information recording portion, records information on actual accomplishment of efforts of the user, and can be updated by the user;
a message recording portion that records a second message to be provided to the user or other users; and
an opening condition recording portion that records a condition for displaying the second message recorded in the message recording portion, on a website, wherein
the opening condition recording portion is associated with the actual accomplishment information recording portion,
the second message recorded in the message recording portion is allowed to be displayed on the website, based on recorded information in the opening condition recording portion and the actual accomplishment information recording portion, and
based on at least data recorded in the actual accomplishment information recording portion, when the actual accomplishment of efforts has not been updated by the user for a predetermined period of time, a first message to call attention is sent to the user.
